# EUROPÄISCHE PATENTSCHRIFT

(11) **EP 2 982 649 B1**
(45) Veröffentlichungstag und Bekanntmachung des Hinweises auf die Patenterteilung: **07.03.2018**
(21) Anmeldenummer: 15180253.5
(22) Anmeldetag: 07.08.2015
(51) Int. Cl.: C01B 32/324, C01B 32/342, B01J 20/28, B01J 20/20, B01J 20/30

(54) **VERFAHREN ZUR HERSTELLUNG VON AKTIVKOHLE**
METHOD FOR THE PRODUCTION OF ACTIVATED CARBON
PROCÉDÉ DE FABRICATION DE CHARBONS ACTIFS

(30) Priorität: 08.08.2014 DE 102014111329
(43) Veröffentlichungstag der Anmeldung: 10.02.2016
(73) Patentinhaber: AVA-Co2 Schweiz AG, 6304 Zug (CH)
(72) Erfinder: Vyskocil, Jan, 6045 Meggen (CH); Sahin, Olga, 76139 Karlsruhe (DE); Lai, Mei Yun, 47180 Puchorg, Selangor (MY); Kruse, Andrea, 76646 Bruchsal (DE)
(74) Vertreter: Geitz Truckenmüller Lucht Christ

(56) Entgegenhaltungen:
- WO-A2-2008/058231
- CN-A- 1 736 859
- CN-A- 103 949 216
- CN-B- 103 157 436
- CN-C- 100 560 483
- PUSKER REGMI ET AL: "Removal of copper and cadmium from aqueous solution using switchgrass biochar produced via hydrothermal carbonization process", JOURNAL OF ENVIRONMENTAL MANAGEMENT, Bd. 109, 9. Juni 2012 (2012-06-09), Seiten 61-69, XP055235902, GB ISSN: 0301-4797, DOI: 10.1016/j.jenvman.2012.04.047
- D. KALDERIS ET AL: "Characterization of hydrochars produced by hydrothermal carbonization of rice husk", SOLID EARTH, Bd. 5, Nr. 1, 11. Juni 2014 (2014-06-11), Seiten 477-483, XP055236325, DOI: 10.5194/se-5-477-2014
- Marta Sevilla ET AL: "Sustainable porous carbons with a superior performance for CO2 capture", Energy & environmental science, vol. 4, no. 5, 1 January 2011 (2011-01-01) , page 1765, XP055236322, UK ISSN: 1754-5692, DOI: 10.1039/c0ee00784f

## Beschreibung

Die vorliegende Erfindung betrifft ein Verfahren zur Herstellung von hochwertigen Aktivkohlen aus karbonisierten, nachwachsenden, kohlenstoffhaltigen Biomassen sowie nach dem Verfahren hergestellte Aktivkohlen.
Aktivkohle ist ein auf natürlichen Rohstoffen basierendes Material, das durch seine poröse Struktur und der dadurch extrem großen spezifischen Oberfläche, die nach der BET-Methode ermittelt wird, geeignet ist, chemische Verbindungen und Moleküle zu binden. Durch die hohe adsorptive Eigenschaft kommt Aktivkohle bei der Reinigung von Abluft, Trink- und Abwasser sowie in der Lebensmitteltechnik, Pharmazie und Chemie zum Einsatz.
Für die Herstellung von Aktivkohlen eignet sich eine Vielzahl kohlenstoffhaltiger Rohstoffe, wie Torf, Braun- und Steinkohlen. Weitere Einsatzmaterialien sind nachwachsende Biomassen aus pflanzlichem Material, wie Holz, Getreide, Nussschalen und Fruchtsteine. Letztere stellen ein beachtliches, erneuerbares Kohlenstoffpotential dar und zählen daher zu den umweltverträglichen Rohstoffen.

Verfahren zur Herstellung von Aktivkohle aus Biomassen sind bereits aus der einschlägigen Literatur wie dem Forschungsbericht der Europäischen Kommission zur Herstellung von Aktivkohle auf Basis Braunkohle und Abfallprodukte (ISBN 92-828-5442-6) bekannt. So können durch pyrolytische Verkohlung der Biomassen und anschließender Gasaktivierung Aktivkohlen aus Fruchtsteinen und Nussschalen mit einer spezifischen Oberfläche von bis zu 1.300 m²/g erhalten werden. Von Nachteil ist jedoch die äußerst ungünstige CO₂-Bilanz sowie die Freisetzung von Methan bei diesem Verfahren und die damit einhergehende hohe Belastung der Umwelt.

Im Gegensatz hierzu können mit dem Verfahren der hydrothermalen Karbonisierung karbonisierte Biomassen, also HTC-Kohlen, für eine anschließende Aktivierung zur Verfügung gestellt werden, bei deren Herstellung kein Methan und nur geringste Mengen von CO₂ freigesetzt werden. Die hydrothermale Karbonisierung stellt eine Art "wässrige Verkohlung" dar, bei welcher der Kohlenstoff unter Druck und Hitze aus der Biomasse gelöst wird.

Regmi et al. beschreiben im Journal of Environmental Management 109 (2012), Seiten 61-69, die Herstellung einer Aktivkohle aus Rutenhirse, bei der die karbonisierte Biomasse mit einer wässrigen Lösung aus Kaliumhydroxid bei einer Temperatur von etwa 30°C aktiviert wird. Hierbei hat sich jedoch als nachteilig erwiesen, dass die Aktivierungsreaktion lediglich zu einer Vergrößerung der spezifischen Oberfläche um etwa das 2,4-fache führte und eine Aktivkohle erhalten wird, die eine sehr geringe spezifische Oberfläche mit 5,01 m²/g aufweist.

Aktivierte Kohlenstoffe mit größeren spezifischen Oberflächen können durch eine Behandlung mit Alkalimetallhydroxiden unter höheren Temperaturen erhalten werden, wie beispielsweise in der WO 2008/058231 A2 beschrieben. Die CN 103 949 216 A beschreibt die Aktivierung einer HTC-Kohle, die durch hydrothermale Karbonisierung von mikrokristalliner Cellulose gewonnen wurde. Nachteilig ist, dass die mikrokristalline Cellulose zunächst mit Hilfe von Aufschluss- und Hydrolyseverfahren aus pflanzlicher Biomasse gewonnen werden muss. Diese Aufbereitung erfordert Energie, Arbeitsaufwand und Material, wodurch die mit der hydrothermalen Karbonisierung erreichte, positive CO2-Bilanz geschmälert wird. Zudem fallen große Mengen an Säuren und Laugen an, die entweder rückgewonnen und recycled oder entsorgt werden müssen.
Ferner sind Verfahren bekannt, die Aktivkohlen liefern, jedoch aufgrund der Karbonisierungsmethode bereits unvorteilhaftere CO2-Bilanzen aufweisen.
In der CN 1 736 859 A wird beispielsweise die Verkohlung von Kokosnuss- und Walnussschalen mit Hilfe von Mikrowellen beschleunigt.
In der CN 1 736 859 A geht der Aktivierung mit Alkalimetallhydroxiden eine Verkohlung der pflanzlichen Biomasse mit Phosphorsäure voraus, was neben der ungünstigeren CO2-Bilanz den zusätzlichen Nachteil mit sich bringt, dass große Mengen an giftiger Phosphorsäure anfallen.
Aus der DE 600 24 518 T2, der DE 10 2010 002 706 A1 und der DE 10 2011 013 314 A1 sind derartige Aktivierungsverfahren bekannt. Eine Vergrößerung der Oberfläche wird in der DE 600 24 518 T2 und der DE 10 2011 013 314 A1 dadurch erreicht, dass speziell synthetisierte Polymere umgesetzt werden, die in einer der Aktivierung vorausgehenden Reaktion aus erdölbasierten, aromatischen Vorstufen wie Phenol, Melamin, Furan oder Phthalat mit zum Teil toxischen Verbindungen wie Formaldehyd gewonnen wurden. In der DE 10 2010 002 706 A1 ist eine Aktivierung von Pyrolyse-Koks in Gegenwart eines Polyalkylenglykols beschrieben. Hierbei ist wiederum eine ungünstige CO₂-Bilanz und zudem das Erfordernis der Beimengung eines organischen Zusatzmittels von Nachteil.

Hiervon ausgehend liegt der vorliegenden Erfindung die Aufgabe zu Grunde, ein Verfahren zur Herstellung von Aktivkohlen aus nachwachsenden, kohlenstoffhaltigen Biomassen bereitzustellen, das die Nachteile des Standes der Technik überwindet und das eine hochwertige Aktivkohle mit einer großen spezifischen Oberfläche liefert.

Gelöst wird diese Aufgabe durch ein Verfahren gemäß den Merkmalen des Anspruchs 1. Weitere vorteilhafte Ausgestaltungen des Verfahrens können den Unteransprüchen entnommen werden.

Es wurde gefunden, dass karbonisierte, nachwachsende kohlenstoffhaltige Biomassen, ausgewählt aus HTC-Kohle aus Fruchtsteinen und HTC-Kohle aus Nussschalen, hochwertige Aktivkohlen mit einer großen spezifischen Oberfläche liefern, wenn sie mit Kaliumhydroxid, Natriumhydroxid oder einer Mischung aus beiden Hydroxiden als Aktivator einer Wärmebehandlung bei Temperaturen unterworfen werden, bei der der Aktivator in Form einer Schmelze vorliegt.

Kaliumhydroxid schmilzt bei 360°C, das Monohydrat von Kaliumhydroxid mit einem Wasseranteil von bis zu 25 Gew.% schmilzt bereits bei 143°C. Der Schmelzpunkt von Natriumhydroxid liegt bei 323°C. Die Temperatur der Wärmebehandlung wird derart eingestellt, dass der Aktivator in Form einer klaren, flüssigen Schmelze vorliegt. Die Schmelze gewährleistet einen sehr guten Kontakt zwischen Aktivator und den karbonisierten Biomassen während der Wärmebehandlung.

Der Kontakt mit dem Aktivator während der Wärmebehandlung führt zu der Aktivierung der karbonisierten Biomassen. Es können mit dem erfindungsgemäßen Verfahren hochwertige Aktivkohlen mit einer sehr großen spezifischen Oberfläche erhalten werden.

Die karbonisierten Biomassen aus Fruchtsteinen oder aus Nussschalen für die Herstellung der Aktivkohle stammen aus einem hydrothermalen Karbonisierungsprozess, bei dem zunächst Biomasse unter Druck und erhöhter Temperatur, insbesondere auch unter Zuführung von Dampf, in einem als Slurry bezeichneten Gemisch in HTC-Kohle umgewandelt wird. Dieser am Ende des Prozesses die HTC-Kohle enthaltende Slurry wird vom Prozesswasser befreit, weiter aufbereitet und getrocknet. Die trockenen karbonisierten Biomassen dienen schließlich als Ausgangsmaterial für die Herstellung von Aktivkohlen und liefern hochwertige Aktivkohlen.

Der Aktivator und die karbonisierten Biomassen liegen zu Beginn der Wärmebehandlung in einem Gewichtsverhältnis von 0,5:1 bis 6:1 vor. Ist der Anteil an Aktivator mit 30 Gew.% und weniger, bezogen auf das Gesamtgewicht aus karbonisierten Biomassen und Aktivator, zu gering, wird keine zufriedenstellende Aktivierung erzielt. Die obere Grenze des Anteils an Aktivator wird durch die Erhöhung des Verdünnungsfaktors der karbonisierten Biomassen, einer damit verhältnismäßig geringeren Umsetzung zu Aktivkohle pro Vorgang und schließlich durch wirtschaftliche Überlegungen bestimmt.

Die Weise der Herstellung einer Mischung aus karbonisierten Biomassen und Aktivator ist prinzipiell unkritisch. Bevorzugt werden die karbonisierten Biomassen mit dem Aktivator gemischt, indem der Aktivator in Form von körnigem Pulver oder Plätzchen mit den karbonisierten Biomassen, die körnig oder pulverförmig vorliegen, vermengt wird und die erhaltene Mischung anschließend wärmebehandelt wird. Eine weitere bevorzugte Vorgehensweise beim Mischen von karbonisierten Biomassen mit Aktivator besteht darin, den Aktivator zunächst vorzulegen, diesen zu schmelzen und die karbonisierten Biomassen der Schmelze zuzugeben.
Nach einer vorteilhaften Ausgestaltung des Verfahrens liegt das Gewichtsverhältnis von Aktivator zu karbonisierten Biomassen zwischen 0,5:1 und 4:1. Ein besonders bevorzugtes Gewichtsverhältnis liegt zwischen 1,5:1 und 2,5:1. Nach einer weiteren vorteilhaften Ausgestaltung des Verfahrens wird die Wärmebehandlung bei Temperaturen zwischen 570°C und 630°C durchgeführt. Das als Aktivator wirkende Kaliumhydroxid, Natriumhydroxid oder eine Mischung aus beiden Hydroxiden wird derart ausgewählt, dass der Aktivator bei den für die Wärmebehandlung gewählten Temperaturen eine klare flüssige Schmelze bildet. Die spezifische Oberfläche der nach der Wärmebehandlung in Gegenwart des Aktivators erhaltenen Aktivkohle ist dabei umso größer, je höher die Temperatur während der Wärmebehandlung gewählt wird. Unterhalb von 350°C erfolgt zwar auch noch eine Vergrößerung der spezifischen Oberfläche. Diese findet jedoch in einem recht geringeren Umfang statt.
Zudem nimmt während der Wärmebehandlung die Ausbeute an Aktivkohle mit steigender Temperatur der Wärmebehandlung als Folge des Masseverlustes an Sauerstoff und Kohlenstoff ab. In einem Temperaturbereich zwischen 410°C und 710°C ist das Verhältnis zwischen der Vergrößerung der spezifischen Oberfläche und der Ausbeute an Aktivkohle sehr ausgeglichen. Besonders bevorzugt ist daher ein Temperaturbereich zwischen 410°C und 710°C. Insbesondere bevorzugt wird die Wärmebehandlung bei Temperaturen zwischen 570°C und 630°C durchgeführt.

Während der Wärmebehandlung kann die Temperatur konstant gehalten werden. Es ist jedoch auch möglich, die Wärmebehandlung bei zu- oder abnehmenden Temperaturen durchzuführen.

Nach einer weiteren vorteilhaften Ausgestaltung der Erfindung wird die Wärmebehandlung zwischen 0,5 und 4 Stunden, bevorzugt zwischen 1,5 und 3 Stunden, besonders bevorzugt zwischen 1,5 und 2,5 Stunden durchgeführt. Bei Zeiten unter einer halben Stunde ist die Vergrößerung der Oberfläche nicht signifikant. Eine Behandlung über 4 Stunden hinaus ist aus wirtschaftlichen Aspekten nicht sinnvoll.

Nach einer weiteren vorteilhaften Ausgestaltung der Erfindung wird die Wärmebehandlung in einer Stickstoffatmosphäre durchgeführt. Hierzu kann die Mischung aus karbonisierten Biomassen und Aktivator in ein Reaktionsgefäß gegeben werden und diese zu Beginn der Wärmebehandlung mit Stickstoff bedeckt werden. Durch die Stickstoffatmosphäre wird der Verbrauch an Aktivator während der Wärmebehandlung reduziert. Neben Stickstoff können auch andere reaktionsträge Gase wie beispielsweise die Edelgase Helium, Neon, Argon, Krypton, Xenon und Radon eingesetzt werden, die die Oxidation des Aktivators vermindern beziehungsweise verhindern. Bevorzugt wird Stickstoff während der Wärmebehandlung mit einer Flussrate zwischen 10 l/Stunde und 40 l/Stunde, besonders bevorzugt mit einer Flussrate zwischen 10 l/Stunde und 25 l/Stunde, über die Mischung aus karbonisierten Biomassen und Aktivator geleitet. Hierdurch wird eine gleichmäßige Versorgung mit Stickstoff gewährleistet.

Nach einer weiteren vorteilhaften Ausgestaltung des Verfahrens schließt sich an die Wärmebehandlung mindestens ein Spülschritt mit deionisiertem Wasser und ein Trocknungsschritt an. Die erhaltene Aktivkohle kann hierbei zunächst mit deionisiertem Wasser über einem Filter gespült werden und anschließend in einem Ofen bei Temperaturen zwischen 80 und 150°C getrocknet werden. Durch die Spülung mit Wasser wird der basische Aktivator aus der erhaltenen Aktivkohle entfernt.
Es ist möglich, einen zusätzlichen Waschschritt mit einer wässrigen Lösung von 0,5 M Salzsäure vorzunehmen. Der zusätzliche Waschschritt beschleunigt die Neutralisierung der erhaltenen Aktivkohle. Nach einem zusätzlichen Waschschritt mit Salzsäure kann eine weitere Spülung der Aktivkohle mit deionisiertem Wasser durchgeführt werden, bis mit einer geeigneten Indikatorlösung, insbesondere 0,1 M Silbernitrat, keine Chlorid-Ionen mehr nachweisbar sind. Nach einer weiteren vorteilhaften Ausgestaltung des Verfahrens sind die karbonisierten Biomassen ausgewählt aus Kirschkern-HTC-Kohle, Pfirsichkern-HTC-Kohle und Mirabellenkern-HTC-Kohle. Die karbonisierten Biomassen können auch aus HTC-Kohle ausgewählt sein, die aus Mischungen von unterschiedlichen Fruchtsteinen oder unterschiedlichen Nussschalen oder von Mischungen aus Fruchtsteinen und Nussschalen, jeweils auch in Vermischung mit weiteren nachwachsenden, kohlenstoffhaltigen Biomassen hergestellt wurden. Insbesondere Fruchtsteine wie Kirschkerne, Pfirsichkerne oder Mirabellenkerne fallen in großen Mengen in der Lebensmittel- und Getränkeherstellung als Abfallstoffe an. Hierdurch sind die Ausgangsstoffe für eine hydrothermale Karbonisierung und anschließende Aktivierung leicht und kostengünstig zu beschaffen.
Nach einer weiteren vorteilhaften Ausgestaltung der Erfindung weisen die zur Herstellung der Aktivkohlen eingesetzten HTC-Kohlen eine spezifische Oberfläche unter 30 m²/g, besonders bevorzugt zwischen 15 und 25 m²/g auf. Derartige HTC-Kohlen können in einem hydrothermalen Karbonisierungsprozess aus Biomassen gewonnen werden, indem die Biomasse mit Wasser und unter Druck für mehrere Stunden bei Temperaturen zwischen 150 und 400 °C karbonisiert wird, beispielsweise zunächst eine Stunde bei 160 °C und anschließend 5 Stunden bei 220 °C. Insbesondere kann eine HTC-Kohle aus Kirschkernen mit einer spezifischen Oberfläche von etwa 20 m²/g eingesetzt werden.

Ein weiterer Gegenstand sind die durch das erfindungsgemäße Verfahren hergestellten hochwertigen Aktivkohlen. Die erhaltenen hochwertigen Aktivkohlen zeichnen sich dadurch aus, dass sie eine große spezifische Oberfläche mit über 700 m²/g, bevorzugt über 1.000 m²/g, besonders bevorzugt über 2.000 m²/g und insbesondere über 2.500 m²/g aufweisen.

Nach einer vorteilhaften Ausgestaltung der Aktivkohlen, weisen die Aktivkohlen eine ausgeprägte Mikroporenstruktur auf. Eine ausgeprägte Mikroporenstruktur bedeutet, dass über 60 % der Poren der Aktivkohle Mikroporen sind, die im Wesentlichen einen Durchmesser zwischen 0,7 und 2 nm aufweisen. Hierdurch besitzen die Aktivkohlen eine Vielzahl an Poren und somit eine große wirksame Oberfläche zur Adsorption von Stoffen.

Weitere Vorteile und vorteilhafte Ausgestaltungen sind den nachfolgenden Beispielen und den Ansprüchen zu entnehmen. Die Beispiele dienen der Erläuterung der Erfindung und sollen diese in keiner Weise beschränken.

### Beispiele

### Beispiel 1:

HTC-Kohle aus Kirschkernen wurde mit Kaliumhydroxid, rein, in einem Gewichtsverhältnis von 4:1 Kaliumhydroxid zu HTC-Kohle in einen Aktivierungsreaktor gegeben und homogenisiert. Sowohl die HTC-Kohle, als auch das Kaliumhydroxid waren vorher in einer Mühle gemahlen worden. Die Partikelgröße der HTC-Kohle betrug im Mittel etwa 1 mm. Die Mischung wurde bei 600°C in einem Ofen für 2 Stunden wärmebehandelt. Die Aktivierungsbedingungen wurden derart gewählt, dass das Kaliumhydroxid innerhalb kürzester Zeit vollständig geschmolzen war, so dass die Wärmebehandlung für etwa 2 Stunden in Gegenwart der Schmelze stattfand. Nach dem Abkühlen wurde die erhaltene Aktivkohle mit deionisiertem Wasser gespült und mehrere Stunden in einem Ofen bei 105°C getrocknet. Die Ausbeute an Aktivkohle betrug etwa 20 %, ausgehend von der HTC-Kohle.

Die Aktivkohle wurde hinsichtlich ihrer physikalischen Eigenschaften und Ihres Adsorptionsvermögens untersucht. Es wurden die spezifische Oberfläche, die Schüttdichte sowie der Aschegehalt ermittelt. Zudem wurde das Adsorptionsvermögen gegenüber Schwermetallen, Phenol und Chloroform sowie die Jodzahl bestimmt. Es ergaben sich folgende Werte:
- spezifische (BET-)Oberfläche 2.910 m²/g
- Schüttdichte 0,16 g/ml
- Aschegehalt 5 Gew.%
- maximale Chloroform-Beladung 0,97 g/g
- maximale Cu²⁺-Beladung 47,8 mg/g
- maximale Phenolbeladung 50,1 mg/g
- Jodzahl 1.016 mg/g

Die erhaltene Aktivkohle weist neben einer sehr großen spezifischen Oberfläche mit 2.910 m²/g mit einem Wert für die maximale Chloroform-Beladung von 0,97 g/g auch eine sehr große Kapazität zur Adsorption von Chloroform auf. Vergleichsmessungen, die an einer handelsüblichen Aktivkohle vorgenommen wurden, die mittels pyrolytischer Verkohlung der Biomassen und anschließender Gasaktivierung hergestellt wird, ergaben lediglich eine spezifische (BET-)Oberfläche von 1.100 m²/g und eine maximale Chloroform-Beladung von 0,43 g/g. Auch die Kapazität zur Adsorption von Kupfer mit einer maximalen Beladung von 47,8 mg/g war im Vergleich zu der handelsüblichen Aktivkohle mit 12,1 mg/g höher.

Zudem wurde die Porosität der erhaltenen Aktivkohle bestimmt. Hierbei wurde festgestellt, dass etwa zwei Drittel des Porenvolumens aus Mikroporen, die im Wesentlichen einen Durchmesser zwischen 0,7 und 2 nm aufweisen, besteht. Mit einem Anteil von über 60 % weist die erhaltene Aktivkohle eine ausgeprägte Mikroporenstruktur auf. Dies ist sehr vorteilhaft, da die Mikroporen für die Adsorption einer Vielzahl von Molekülen und Stoffen zur Verfügung stehen.

### Vergleichsbeispiel 2:

Das Verfahren wurde wie unter Beispiel 1 beschrieben durchgeführt, bis auf die Temperatur der Wärmebehandlung, die 450°C betrug. Die Ausbeute lag bei etwa 40 %. Für die erhaltene Aktivkohle wurden folgende Werte ermittelt:
- spezifische (BET-)Oberfläche 1.140 m²/g
- maximale Chloroform-Beladung 0,48 g/g
- maximale Cu²⁺-Beladung 19 mg/g
- maximale Phenolbeladung 52,6 mg/g

### Vergleichsbeispiel 3:

Das Verfahren wurde wie unter Beispiel 1 beschrieben durchgeführt, bis auf die Temperatur der Wärmebehandlung, die 500°C betrug. Für die erhaltene Aktivkohle wurden folgende Werte ermittelt:
- spezifische (BET-)Oberfläche 1.290 m²/g
- maximale Chloroform-Beladung 0,56 g/g

### Beispiel 4:

Das Verfahren wurde wie unter Beispiel 1 beschrieben durchgeführt. Anstelle von HTC-Kohle aus Kirschkernen wurde HTC-Kohle aus Haselnussschalen verwendet. Die Ausbeute betrug etwa 12 %. Für die erhaltene Aktivkohle wurden folgende Werte ermittelt:
- spezifische (BET-)Oberfläche 1.998 m²/g
- maximale Chloroform-Beladung 0,90 g/g

### Beispiel 5:

Das Verfahren wurde wie unter Beispiel 1 beschrieben durchgeführt. Anstelle von HTC-Kohle aus Kirschkernen wurde HTC-Kohle aus Kokosnussschalen verwendet. Die Ausbeute betrug etwa 30 %. Die spezifische (BET-)Oberfläche belief sich auf 2.579 m²/g.

### Vergleichsbeispiel:

HTC-Kohle aus Kirschkernen wurde in einer wässrigen Lösung von 0,5 M, 1 M oder 2 M Kaliumhydroxid bei 30°C aktiviert. Anschließend wurde die Kaliumhydroxidlösung abfiltriert. Das Reaktionsprodukt wurde mit deionisiertem Wasser gewaschen und in einem Ofen bei 105°C über mehrere Stunden getrocknet. Bei einer Bestimmung der spezifischen Oberfläche nach dem BET-Verfahren zeigte das erhaltene Reaktionsprodukt keine signifikante Vergrößerung der spezifischen Oberfläche.

### Beispiel für HTC-Kohle aus Kirschkernen:

Für die Herstellung der HTC-Kohle wurden Kirschkerne mit einem Wassergehalt von etwa 60 %, bezogen auf die Trockensubstanz, verwendet. Die Tabelle 1 zeigt die Zusammensetzung der Kirschkerne:

**Tabelle 1: Zusammensetzung der Kirschkerne**

| | | Massenanteil, bezogen auf Trockensubstanz [Ma-%] | | | | | | |
|---|---|---|---|---|---|---|---|---|
| Ausgangsstoff | Lignin | Hemicellulose und Cellulose* | Asche | C | H | N | S | O |
| Kirschkernen | 19,67 | 79,93 | 0,4 | 54,5 | 6,9 | 1 | 0,2 | 37 |

| | | | | | | | | |
|---|---|---|---|---|---|---|---|---|
| *Hemicellulose und Cellulose bilden zusammen 79,93 %, es wurde nur Lignin und Asche (anorganischer Anteil) bestimmt | | | | | | | | |

Die Kirschkerne wurden einer hydrothermalen Karbonisierung mit Wasser und unter Druck für eine Stunde bei 160 °C und anschließend 5 Stunden bei 220 °C unterworfen. Die Ausbeute nach der hydrothermalen Karbonisierung lag bei ca. 80 %. Es wurde eine HTC-Kohle mit einer spezifischen Oberfläche von etwa 20 m²/g gewonnen, deren Brennwert mit etwa 25 MJ/kg im Bereich der fossilen Braunkohle liegt.

Die Bestimmung der Eigenschaften der Aktivkohlen fand nach den nachfolgend aufgezeigten Methoden statt:

### Bestimmung der spezifischen Oberfläche nach der BET-Methode:

Die spezifische Oberfläche wurde über Gasadsorption nach der BET-Methode ermittelt. Hierbei wurde ein Mehrpunkt-BET-Gerät zur Aufnahme der Adsorptions-Desorptions-Isotherme mittels Stickstoff eingesetzt.

### Messung der Chloroform-Adsorption:

Die Bestimmung der Kapazität zur Chloroform-Adsorption erfolgte mittels Gasdurchfluss durch einen Glaszylinder der 0,3 g der erhaltenen Aktivkohle enthielt. Als Durchflussmedium diente chloroformangereicherter Stickstoff, der mit einer Durchflussgeschwindigkeit von 25 l/Stunde durch den Glaszylinder geleitet wurde. Mittels einer Waage wurde die Veränderung der Masse der Aktivkohle beobachtet und die maximale Chloroform-Beladung ermittelt.

### Messung der Schwermetall- und Phenoladsorption:

Die Ermittlung der maximalen Beladungskapazität erfolgte jeweils mit Hilfe von wässrigen Lösungen an Kupfersulfat und Phenol in einer Konzentration von 100 mg/l Schwermetallsulfat bzw. Phenol. Die erhaltene Aktivkohle wurde für 24 Stunden in Konzentrationen zwischen 0,5 und 5 g/l in der wässrigen Kupfersulfat- oder Phenollösung in einem Überkopfschüttler bei Raumtemperatur geschüttelt. Anschließend wurde die Beladungskapazität über Optische Emissionsspektrometrie mit induktiv gekoppeltem Plasma (ICP-OES) ermittelt.

### Bestimmung der Porosität:

Die Charakterisierung der Porenverteilung erfolgte durch das Verlaufsprofil der isothermen Stickstoffsorption bei 77 K im Relativdruckbereich p/p₀ zwischen 0,0001 und 1. Aus den Messdaten wurde das absolute Porenvolumen und, anhand des DR-Modells (Dubinin Radushkevich), das Gesamtporenvolumen an Poren mit einem Durchmesser kleiner als 2 nm bestimmt. Anschließend wurden die Isothermen der CO₂-Sorption bei 273 K im Relativdruckbereich p/p₀ von 0,01 bis 0,03 ermittelt. Die Messdaten aus der isothermen CO₂-Sorption wurden ebenfalls anhand des DR-Modells ausgewertet und lieferten den Porenvolumenanteil an Poren mit einem Durchmesser kleiner 0,7 nm.

Sämtliche Merkmale der Erfindung können sowohl einzeln als auch in beliebiger Kombination miteinander erfindungswesentlich sein.

## Patentansprüche

1. Verfahren zur Herstellung von Aktivkohlen aus karbonisierten, nachwachsenden kohlenstoffhaltigen Biomassen, wobei die karbonisierten Biomassen mit Kaliumhydroxid, Natriumhydroxid oder einer Mischung aus beiden Hydroxiden als Aktivator einer Wärmebehandlung bei Temperaturen zwischen 570°C und 630°C unterworfen werden, bei denen der Aktivator in Form einer Schmelze vorliegt und wobei der Aktivator und die karbonisierten Biomassen zu Beginn der Wärmebehandlung in einem Gewichtsverhältnis von 0,5:1 bis 6:1 vorliegen, **dadurch gekennzeichnet, dass** die karbonisierten Biomassen ausgewählt sind aus HTC-Kohle aus Fruchtsteinen und HTC-Kohle aus Nussschalen, die eine spezifische Oberfläche unter 30 m²/g aufweisen und deren Partikelgröße im Mittel 1 mm beträgt.

2. Verfahren nach Anspruch 1, **dadurch gekennzeichnet, dass** der Aktivator und die karbonisierten Biomassen zu Beginn der Wärmebehandlung in einem Gewichtsverhältnis von 0,5:1 bis 4:1, besonders bevorzugt von 1,5:1 bis 2,5:1 vorliegen.

3. Verfahren nach Anspruch 1 oder 2, **dadurch gekennzeichnet, dass** die Wärmebehandlung zwischen 0,5 und 4 Stunden, bevorzugt zwischen 1,5 und 3 Stunden, besonders bevorzugt zwischen 1,5 und 2,5 Stunden durchgeführt wird.

4. Verfahren nach einem der vorhergehenden Ansprüche, **dadurch gekennzeichnet, dass** die Wärmebehandlung in einer Stickstoffatmosphäre durchgeführt wird.

5. Verfahren nach einem der vorhergehenden Ansprüche, **dadurch gekennzeichnet, dass** die karbonisierten Biomassen ausgewählt sind aus Kirschkern-HTC-Kohle, Pfirsichkern-HTC-Kohle und Mirabellenkern-HTC-Kohle.

6. Verfahren nach einem der vorhergehenden Ansprüche, **dadurch gekennzeichnet, dass** die zur Herstellung der Aktivkohlen eingesetzten HTC-Kohlen eine spezifische Oberfläche bevorzugt zwischen 15 und 25 m²/g aufweisen.

## Claims

1. A method for the preparation of activated carbon from carbonized, renewable carbonaceous biomasses, wherein the carbonized biomasses are subjected to a heat treatment at temperatures between 570°C and 630°C with potassium hydroxide, sodium hydroxide or a mixture of both hydroxides as activator, wherein the activator is present in the form of a melt and wherein the activator and the carbonized biomass are present at the beginning of the heat treatment in a weight ratio of 0.5:1 to 6:1, **characterized in that** the carbonized biomasses are selected from HTC coal from fruit stones and HTC coal from nutshells which have a specific surface area below 30 m²/g and whose particle size is on average 1 mm.

2. A method according to claim 1, **characterized in that** the activator and the carbonized biomass are present at the beginning of the heat treatment in a weight ratio of 0.5:1 to 4:1, particularly preferably from 1.5:1 to 2.5:1.

3. A method according to claim 1 or 2, **characterized in that** the heat treatment is carried out between 0.5 and 4 hours, preferably between 1.5 and 3 hours, particularly preferably between 1.5 and 2.5 hours.

4. A method according to one of the preceding claims, **characterized in that** the heat treatment is carried out in a nitrogen atmosphere.

5. A method according to one of the preceding claims, **characterized in that** the carbonized biomasses are selected from cherry core HTC coal, peach core HTC coal and mirabelle core HTC coal.

6. A method according to one of the preceding claims, **characterized in that** the HTC coals used for the preparation of the activated carbons have a specific surface preferably between 15 and 25 m²/g.

## Revendications

1. Procédé de fabrication de charbons actifs à partir de biomasses carbonées renouvelables carbonisées, lesquelles biomasses carbonisées sont soumises à un traitement thermique à des températures comprises entre 570 °C et 630 °C avec de l'hydroxyde de potassium, de l'hydroxyde de sodium ou un mélange des deux hydroxydes comme activateur, auxquelles températures l'activateur est présent sous la forme d'une masse fondue et l'activateur et les biomasses carbonisées étant présents, au début du traitement thermique, dans un rapport de poids de 0,5:1 à 6:1, **caractérisé en ce que** les biomasses carbonisées sont choisies parmi du charbon HTC issu de noyaux de fruits et du charbon HTC issu de coquilles de noix qui présentent une surface spécifique inférieure à 30 m²/g et dont la taille de particules est en moyenne de 1 mm.

2. Procédé selon la revendication 1, **caractérisé en ce que** l'activateur et les biomasses carbonisées sont présents, au début du traitement thermique, dans un rapport de poids de 0,5:1 à 4:1, particulièrement de préférence de 1,5:1 à 2,5:1.

3. Procédé selon la revendication 1 ou 2, **caractérisé en ce que** le traitement thermique est effectué entre 0,5 et 4 heures, de préférence entre 1,5 et 3 heures, particulièrement de préférence entre 1,5 et 2,5 heures.

4. Procédé selon l'une des revendications précédentes, **caractérisé en ce que** le traitement thermique est effectué dans une atmosphère d'azote.

5. Procédé selon l'une des revendications précédentes, **caractérisé en ce que** les biomasses carbonisées sont choisies parmi du charbon HTC de noyaux de cerises, du charbon HTC de noyaux de pêches et du charbon HTC de noyaux de mirabelles.

6. Procédé selon l'une des revendications précédentes, **caractérisé en ce que** les charbons HTC utilisés pour la fabrication des charbons actifs présentent une surface spécifique comprise de préférence entre 15 et 25 m²/g.
